# EUROPEAN PATENT SPECIFICATION

(11) **EP 1 535 152 B1**
(45) Date of publication and mention of the grant of the patent: **28.05.2008**
(21) Application number: 03793796.8
(22) Date of filing: 03.09.2003
(51) Int. Cl.: G06F 9/46, G09B 5/12

(54) **TUTOR INTERFACE WITH CONTENT BASED MESSAGING**
TUTOR SCHNITTSTELLE MIT INHALTSBASIERTEM DATENTRANSFER
INTERFACE TUTORIELLE COMPORTANT UNE MESSAGERIE A BASE DE CONTENU

(30) Priority: 03.09.2002 US 232810
(43) Date of publication of application: 01.06.2005
(73) Proprietor: SAP AG, 69190 Walldorf (DE)
(72) Inventor: DORNER, Elmar, 76133 Karlsruhe (DE); GROSSMANN, Markus, 71665 Vaihingen (DE)
(74) Representative: Müller-Boré & Partner Patentanwälte
(86) International application number: PCT/EP2003/009786
(87) International publication number: WO 2004/023430

(56) References cited:
- US-A- 5 881 315
- US-A- 6 148 338
- US-A1- 2002 006 603
- HEWLETT PACKARD: "hp OpenView service navigator"[Online] May 2002 (2002-05), - May 2002 (2002-05) pages 1-2, XP002274906 Retrieved from the Internet: URL:http://www.pervigil.com/PDF/HP/sernav_ pb_jun02.pdf> [retrieved on 2004-03-24]
- CHAPPELL D A: "Asynchronous Web Services and the Enterprise Service Bus" WEBSERVICES, 6 May 2002 (2002-05-06), XP002269724
- STEVE TRYTHALL: "JMS and CORBA Notification Interworking" ONJAVA, [Online] 12 December 2001 (2001-12-12), - 12 December 2001 (2001-12-12) pages 1-8, XP002274907 Retrieved from the Internet: URL:http://www.onjava.com/pub/a/onjava/200 1/12/12/jms_not.html> [retrieved on 2004-03-24]
- HEWLETT PACKARD: "HO OpenView Integration Guide for Developers"[Online] July 2002 (2002-07), pages 67-92, XP002274908 Retrieved from the Internet: URL:http://h21007.www2.hp.com/dspp/files/u nprotected/OpenView/IntegrationGuide/OV_In tegration_Guide_7_30.pdf> [retrieved on 2004-03-24]
- SUN MICROSYSTEMS: "Developing Web Services with SUN tm Open Network Environment" SUN WHITE PAPER, [Online] March 2002 (2002-03), - March 2002 (2002-03) pages 1-32, XP002274909 Retrieved from the Internet: URL:http://wwws.sun.com/software/sunone/wp -spine/spine.pdf> [retrieved on 2004-03-24]

## Description

### TECHNICAL FIELD

The following description relates generally to e-learning and in particular to content based messaging for e-learning.

### BACKGROUND

Systems and applications for delivering computer-based training (CBT) have existed for many years. However, CBT systems historically have not gained wide acceptance. A problem hindering the reception of CBT systems is the lack of traditional management and oversight that is common in classroom training, Merely providing training material online does not guarantee that a learner will comprehend and learn the training material because many learners have difficulty with self-guided learning.

Although online help provides some assistance to the leamer, it is difficult for an instructor or teaching assistant to gain insight about the current state and needs of an online leamer absent some direct communication with the learner. Some insight may be gained from review of exercises, problems, and testing material, which can be used to gauge the learner's comprehension of the training material and the learner's progress.

In this respect, many CBT systems fail or fall short of their true potential because they do not provide for the use of dynamic information about a learner's activities.

HEWLETT PACKARD: "hp OpenView service navigator" [Online] May 2002 (2002-05), pp. 1 to 2, XP002274906 discloses a navigator with role-based service views wherein depending on a user's role or expertise, different views into the managed environment can be enabled, allowing users to focus on the services and sub-services in their particular area of expertise. Further, the navigator provides service impact analysis wherein lower-level data is interpreted in terms of its importance to the higher-level services. Specific, user-definable actions enable direct control of application services. Pre-configured service models are provided for selected services and applications, and to determine and analyze the business impact, the HP OpenView service navigator can log service status changes into the HP OpenView database. The logged data is the foundation for true service availability reporting.

Chappell, D.A. in "Asynchronous Web Services and Enterprise Service Bus", XP002269724 discloses remote procedure calls (RPC) used in the Simple Object Access Protocol (SOAP) across the Internet over an HTTP connection. These RPCs are described to implement asynchronous message-based Web services.

US-A-5 881 315 discloses an event management service (EMS) operating in a distributed computing environment which includes a queuing mechanism for controlling passage of events through an event channel when multiple event consumers cannot consume events being generated by one or more event suppliers as the events are being generated. The queuing mechanism includes a number of queues: an input queue that receives queue elements for each event that reaches the service, an active queue that receives queue elements for each event that any event consumer has registered to receive, and a consumer queue for each event consumer registered to receive any event. A multi-threaded process control routine processes the queue elements to control passage of the events to the event consumers.

Hewlett Packard: "HO OpenView Inegration Guide for Developers" (online) XP002274908 (D7) discloses a so called "super guide" to the HP OpenView world, whereby this guide simplifies HP OpenView integration for UNIX and Windows developers.

Sun Mircrosystems: "Developing Web Services with SUN tm Open Network Environment" Sun White Paper, (online), XP002274909 (D8) discloses an architecture for delivering Services on Demand wherein web services are being built with open technologies on an integratable and manageable framework that can embrace and extend existing IT assets.

It is the object of the invention to provide a tutor system and a method according to which past events to any application starting after events have been published are assessable to a distributed event based system following a publish/subscribe paradigm.

This object is fulfilled by the features of the independent claims. Preferred embodiments are defined in the dependent subclaims.

According to the invention, there is provided a tutor system in a content based messaging (CBM) network, comprising:
an input to receive one or more notifications of published learner events, each event representing a learner's action; and a processor to generate subscriptions to the notifications, to process the received notifications, and to generate a tutor interface based on the processed notification,
the interface including a course area to display dynamic learner state information,
wherein a content based messaging-remote procedure call (CBM-RPC) protocol is provided as an extension of the CBM network that allows a client to make a function or a procedure call across the CMB network, directly access a remote procedure, and receive data generated by the procedure,
wherein in the content based messaging-remote procedure call (CBM-RPC), a procedure name and parameters are specifyable to be published to the CBM network, the procedure name comprising a unique identification (ID), in particular a uniform resource identification (URI), and wherein one or more procedures are provided that are adapted to subscribe to the request and to generate responses to be published to the CBM network,
wherein a discovery protocol is provided adapted to be used to support the exploration of unique identifiers and their associated procedures, wherein according to the discovery protocol, the client being adapted to publish a discovery request for a service to the CBM network, which is adapted to determine all registered services matching the request and to send a notification of the request to the service; wherein each service is adapted to send a response to the requesting consumer; the discovery request including a namespace identifier and/or a service class; wherein addressing in the CBM-RPC request is Implemented using a "from" field being a unique identifier of the client making the procedure call and a "to" field being a unique identifier of a server to which the procedure is registered and being reported in the response to the discovery request, wherein in the response the "from" and "to" elements are interchanged;
the tutor system further comprising:
a state system including at least one server and at least one state database, wherein the at least one server provides state access functions, wherein the state access functions may be called using the CBM-RPC protocol to access information stored in the state database, wherein the information comprises past leamer's events as historical data,
the at least one server further providing state services that are adapted to
   - subscribe to at least one learner event,
   - process and store information based on the notification, in the at least one database,
   - publish state update events to the CBM network when there is a modification to the state of a learner.

Selection of the learner diary feature causes the display of a learner diary. The learner diary may display one or more actions of a learner over a period of time. The period of time may be a week where each day is displayed as a section in the diary display.

The interface may include a watch list display including one or more courses monitored by the interface. Selection of a course from the watch list may cause the course area to populate with information based on the selected course.

The interface also may include a message area to provide a message service.

The processor is configured to generate a CBM-remote procedure call (RPC) to access a remote function. The input may be configured to receive a return notification based on the remote procedure call causing the processor to populate the interface with information based on the return notification. The information based on the return notification may be learner state information. The input also may be configured to receive notifications based on learner update events produced by a remote service. The processor may be configured to populate the interface with information based on the learner update event notifications. The learner update information may be based on a modification to a dynamic state of one or more learners.

In another general aspect, a graphical user interface for a tutor application includes a course area to display information about a course based on a notifications of published events received from a content based messaging network, the course area displaying a list of one or more learners taking the course and information about the one or more learners on the list.

In another general aspect, a method of providing a tutoring interface according to claim 13 includes subscribing to one or more learner events; receiving one or more notifications based on the subscribed to events; and generating a tutor interface based on received notifications, the interface including learner information. The method may include subscribing to a content based message network.

In another general aspect, a computer readable medium according to claim 18 includes instructions for causing a processor to receive one or more notifications of published learner events; and generate subscriptions to the notifications, process the received notifications, and to generate a tutor interface based on the processed notification, the interface including a course area to display dynamic learner state information. The instructions may cause the processor to populate the course area with a list of learners monitored by the tutor.

Other features and advantages will be apparent from the description, the drawings, and the claims.

### DESCRIPTION OF DRAWINGS

FIG 1 is an exemplary block diagram of a content based messaging system including the extension of a remote procedure call.
FIG. 2 is an example of an e-learning system with content based messaging including the extension of a remote procedure call.
FIG 3 is an exemplary process for an e-learning tutoring application.
FIG 4 is an exemplary screen shot of an e-learning tutor user interface.
FIG 5 is an exemplary screen shot of an e-learning tutor user interface.

Like reference symbols in the various drawings indicate like elements.

### DETAILED DESCRIPTION

### Content Based Messaging System with Remote Procedure Call Protocol

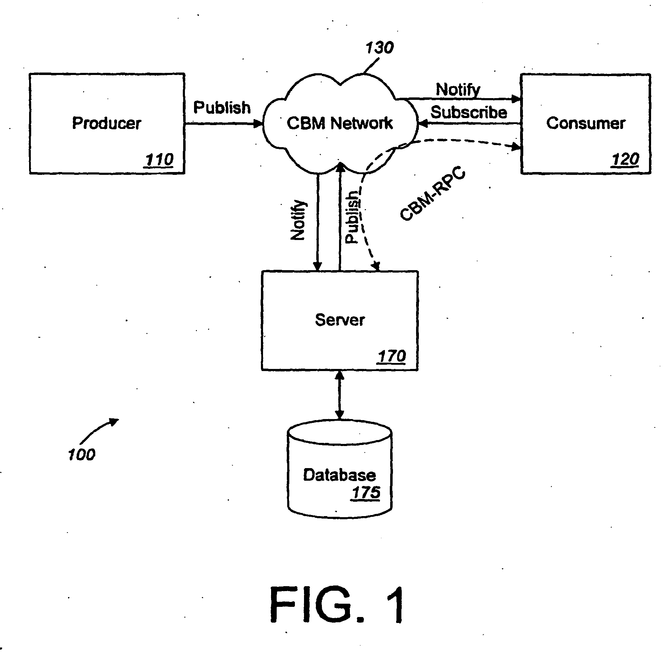

A content based messaging (CBM) system, such as, for example, Elvin, CosNotif, JMS, Keryx, and Gryphon may be used to distribute information to users, clients, and applications. As shown in Fig. 1, a CBM system 100 may include one or more information producers 110 (e.g., programs or applications running on a network device, such as a processor, workstation, or server), one or more information consumers 120 (i.e., programs or applications running on a network device, such as a processor, workstation, or server), and a CBM network 130 (e.g., one or more network devices, such as a server and associated data transportation media) for receiving and distributing information. Although Fig. 1 shows only one producer and one consumer, the CBM system 100 may include multiple producers and consumers. In addition, an application may be both a producer and a consumer of information.

An information consumer registers interest (i.e., a subscription) in specific information with the CBM network 130. An information producer 110 publishes information to the CBM network 130 corresponding to an event. An event may correspond to any action taken by a program or application. The CBM network 130 provides notifications of the published information to those consumers 120 who subscribe to the information corresponding to an event.

The CBM network 130 may include one or more data processing and distributions devices (e.g., servers, associated communications media, and data transport systems). For example, the CBM network 130 may include one or more filtering servers that receive published information and generate notifications that are transmitted to consumers 120 who subscribe to the information. The filtering server may compute the registered subscriptions that match a published event and generate a notification (i.e., a description of the real world occurrence) that is sent to the consumers 120 determined from the computed subscriptions.

The CBM system 100 provides event-driven network communications that allow essentially real-time communication of information between applications by avoiding communication delays and wasted network bandwidth associated with polling for data. In addition, processing and overhead associated with addressing may be greatly reduced because each producer and each consumer do not need to know about each other (and their addresses).

The CBM system 100 also may include a server 170 providing one or more services, procedures, and/or methods that publish information to the CBM network 130. The server 170 may have an associated database or storage device 175 to store data used by the server 170 and its services, procedures, and methods. A procedure is a function that takes one or more parameter values and returns a function value or fault. A service may provide an interface for a set of procedures. A service may function as a container for a set of procedures. A service includes a service class and the semantics for each of the procedures in the service class. The semantics include an explanation of the procedures' functionality. The functionality of procedures in a service class may be related or similar.

Typically, a CBM system does not provide a way for a consumer to access a remote procedure (e.g., a procedure running on another network device) because the consumer 120 is unaware of the location (i.e., the address) of the procedure. In order to preserve the benefits of a distributed messaging system (e.g.; reduced processing and bandwidth), while providing for remote access of procedures, a content based messaging-remote procedure call (CBM-RPC) protocol is provided.

The CBM-RPC protocol is an extension of the CBM network 130 that provides a way for consumers 120 (e.g., clients/applications) to make a function or a procedure call across the CBM network 130, access a remote procedure, and receive data (e.g., a return value) generated by the procedure.

As explained above, a consumer 120 of a CBM network 130 may subscribe to an event; however, the consumer in a conventional CBM system may not request information directly from a procedure. Instead, a consumer 120 waits for notifications of published information from the CBM network 130 based on a content type of the published information. In other words, an application may register with the CBM network 130 to receive notifications of published events; however, the application does not request information across the CBM network 130 directly from a procedure.

The CBM-RPC protocol is an extension of a CBM system that allows an application to directly access a remote procedure and, for example, obtain data returned by the procedure (e.g., stored in an associated database or storage device). A consumer 120 may specify a procedure name (e.g., a unique identification (ID), such as a uniform resource identification (URI)) and parameters (e.g., a list of name/value-pairs) in a request (or a CBM-RPC), which is published to the CBM network 130. One or more, procedures or functions may subscribe to the request and generate responses (e.g., the requested information or a fault if the request is not valid) that are published to the CBM network 130.

Each procedure in the CBM system may be differentiated by an identifier. The procedure identifier may include three parts, for example, a namespace, a service class, and a procedure name. The namespace may be used to distinguish between procedures of different system applications that have the same name, and to group all procedures and service classes of one application, so that components of the CBM system may recognize the procedures associated with an application. For example, a URI or other unique identifier may be used as namespace identifier. Each application may have its own procedure namespace and its own semantics of procedures implemented within an application. For example, application 1 and application 2 may both have a procedure named "getUser"; however, the procedure of application 1 may return "Elmar" while the procedure of application 2 returns "334." Therefore, the semantics of the procedures are different (i.e., name versus user ID number).

Procedures also may be grouped into logical procedure families called "service classes." A service class may define a service and be used to instantiate the service. In the following description, a "service" may be a combination of a service class name and procedures associated with the service class. The procedure name defines a name used to identify a procedure.

Each procedure may have one or more associated parameters and a return value. Both the parameters and the return value should use data types recognized by the CBM system 100. Using Elvin CBM as an example, four different data types (e.g., "int32", "int64", "real64" and "string") are supported that may be used for names, parameters, returns, and values in a notification.

If a particular CBM protocol does not provide a composite data type (e.g., a record or an array) the following composite data type may used. The composite data type identifier may be "composite." The data type may be constructed using an XML markup style and stored in a CBM notification using an ordinary string value. For example, the structure of the markup of a course member may be implemented as follows: 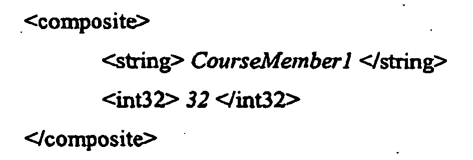 In this example, the start delimiter and end delimiter are "composite," and the tag names for the entries may be CBM datatypes.

The CBM system 100 provides for multipoint-connections. For example, two or more services having the same name may exist in the same namespace, each of which may generate a response to a CBM-RPC request. As a result, the CBM-RPC protocol may ensure that an application (i.e., a consumer or a client) only receives responses from those procedures that were called by the application using a unique identifier.

The CBM-RPC protocol provides for directed communication that is unambiguously addressed using the unique procedure identifier. Each server having registered procedures and each client running applications are provided with a unique identifier. For example, the URI of the server implementing the called procedure and the client making the call may be used as a unique identifier by the CBM-RPC protocol. Addressing may be implemented using "from" and "to" fields, as described in further detail below. A discovery protocol may be used to support the exploration of unique identifiers and their associated procedures, as explained below.

A CBM-RPC request may include the identifiers of the client (i.e., the calling application), the namespace, the server (running the called procedure), the service class, and/or the procedure. The CBM-RPC request identifiers of the CBM-RPC request may be used to distinguish between different CBM-RPCs for the same procedure. The CBM-RPC request also may include one or more parameters used by a called procedure.

A client (e.g., an application for a tutor interface) may need to determine data (e.g., the users taking an e-learning course). A procedure running on a server may provide the name of the learners taking a course. The client publishes a request to the CBM network 130 for a procedure named "getCourseMembers" of service class "course." The procedure takes a parameter of type "string" for the course name and returns a value of composite (e.g., for the names of learners taking the course). An example of such a CBM-RPC request may be implemented as follows:

| | |
|---|---|
| CBM.rpc.request: | 1 |
| minor: | 0 |
| from: | "http://192.168.0.0/PresenceServlet" |
| to: | "http://learningsolution/stateserver" |
| namespace: | "http://www.sap.com/cbm/elearning" |
| requestid: | 2783462725871 |
| serviceclass: | "course" |
| method: | "getCourseMembers" |
| params: | "<composite><string>course</string></composite>" |
| course: | "sapcourse20" |

"CBM.rpc.request" may be used to identify the major version of the protocol that is used, and "minor" may be used to indicate a minor version of the protocol that is used. The protocol versions may be used by the CBM system 100 to ensure that a compatible or correct version of the protocol is being used. "from" may be a unique identifier (e.g., a URI) of the client making the procedure call. "to" may be a unique identifier (e.g., URI) of a server to which the procedure is registered. The request ID is a unique number identifying requests so that an application may distinguish between calls and match calls to responses. The method is the name of the method used to implement the procedure. The "params" field indicates the names of the procedure parameters. Using the parameter names, the name/values pairs of the procedure parameters may be identified. The params field also indicates the correct order of the parameter values. The "course" field is the name of the course for which the information is requested. After receiving a request notification from the CBM-network 130. The server may identify the called procedure and execute the procedure to determine a result. The procedure may return a response.

A response to a request may be similar in format to the request. For example, if a response is successfully determined (e.g., the procedure was found, executed correctly, and return a result), then the CBM-RPC response is similar to the request, except that the "from" and "to" elements have been interchanged and the "params" element is replaced by a "returns" element (e.g., which includes the information requested by the application/client making the procedure call). A complete response to the CBM-RPC example described above may look like:

| | |
|---|---|
| CBM.rpc.response: | 1 |
| minor: | 0 |
| from: | "http://learningsolution/stateserver" |
| to: | "http://192.168.0.0/PresenceServlet" |
| requestid: | 2783462725871 |
| namespace: | "http://www.sap.com/cbm/elearning" |
| serviceclass: | "course" |
| method: | "getCourseMembers" |
| returns: | "<composite><string>Markus@tutorsolution</string> |
| <string>tiki@learningsolution</string></composite>" | |

If there is a problem processing the CBM-RPC request, the response notification may contain a "fault" element instead of a "returns" element. The fault element may include a string value that describes a problem encountered trying to process the request. For example, a fault indicating the requested procedure does not exist may look like:

| | |
|---|---|
| CBM.rpc.response: | 1 |
| minor: | 0 |
| from: | "http://learningsolution/stateserver" |
| to: | "http://192.168.0.0/PresenceServlet" |
| requestid: | 2783462725871 |
| namespace: | "http://www.sap.com/cbm/elearning" |
| serviceclass: | "course" |
| method: | "getCourseMembers" |
| fault: | "no such procedure!" |

The CBM-RPC protocol does not specify a description for procedures. Therefore, clients may not know in advance the semantics and syntax of each individual procedure. As a result, clients need to be able to determine the procedure identifier, the parameters, parameter types, the return values; and return value data types associated with a particular procedure to make a remote call of the procedure. A discovery protocol may be used to explore registered services that may be called by an application. For example, the discovery protocol may be used to determine if a service is available or unavailable.

According to the discovery protocol, the client publishes a discovery request for a service to the CBM network 130. Each service class may subscribe to the CBM network 130 for discovery requests. The CBM network 130 determines all registered services matching the request and sends a notification of the request to the service. Each service then sends a response to the requesting client. The discovery request may include a namespace identifier and/or a service class. Discovery requests that only include the namespace are sent to all registered services in the namespace. If the service class name is specified in addition to the namespace identifier, the request is set to service class having the corresponding service class name within the identified namespace are returned. The service class responds to the request.

A client may specify a service class if the client knows the name of the procedure, but not the server where the procedure is registered. For example, a discovery request to explore all procedures with the service class name "course" in the given namespace http://www.sap.com/cbm/elearning may be expressed as follows:

| | |
|---|---|
| CBM.rpc.discovery: | 1 |
| minor: | 0 |
| from: | "http://192.168.0.0/PresenceServlet" |
| namespace: | "http://www.sap.com/cbm/elearning" |
| serviceclass: | "course" |

Information responses to the discovery requests are similar to discovery requests. The only information reported in the response is the identifier of the server where the service is registered (e.g., the "from" field of the CBM-RPC). The "to" field may be included but is not necessary. For example, an information response to the service request in the example above may be:

| | |
|---|---|
| CBM.rpc.info: | 1 |
| minor: | 0 |
| from: | "http://learningsolution/stateserver" |
| to: | "http://192.168.0.0/PresenceServlet" |
| namespace: | "http://www.sap.com/cbm/elearning" |
| serviceclass: | "course" |

A CBM-RPC library may be added to applications using the CBM system to make procedure calls. A protocol implementation of CBM may be stored an application library.

Procedures that may be implemented in conjunction with a CBM-RPC may be implemented using code that supports the basic data types described above.

### Example of Procedure and Call in a CBM system

An example of a procedure "getCourseMembers" that returns the names of members that are currently online is defined in a service class called "course" and may be expressed as follows:

```
              public class Course {
              private Composite Members = new Composite("John","Sam");
              public Composite getCourseMembers (string course) {
              Composite list = course.Members);
              return list;
              }
               }
```

The getCourseMembers method of the course class uses a string value representing the name of the course.

Making the getCourseMembers method available using a CBM-RPC in this example includes two steps. First, the method must be registered with the CBM-RPC server and the server has to make a connection to the CBM network. This may be implemented as follows:

```
       System.out.println("Attempting to start CBM-RPC Server...");
       String serverId = "http:/learningsolution/stateserver";
       CBMRpcServer server = new CBMRpcServer(CBMURL, serverId);
       System.out.println("Started successfully");
       // Register our handler class as "course"
       ServiceIdentifier serviceId =
       new ServiceIdentifier(serverId, "http://www.sap.com/cbm/elearning", "rourse');
       Service s = new Service(serviceId, new Course());
       server.addService(s);
       System.out.println("Registered Course class to server.");
```

The client has to connect to the CBM network as well. The following client code fragment shown below may be used to make this connection.

```
       // Connect client to CBM network
       String clientId = "http://192.168.0.0/PresenceServlet";
       CBMRpcClient client = new CBMRpcClient(CBMURL, clientId);

       // Create the request parameters
       string courseName = "BetterSale";
       Parameter params = new Parameter();
       params.put("course", courseName);

       // Issue a request and extract result
       String serverId = "http://learningsolution/stateserver";
       String namespace = = "http://www.sap.com/cbm/elearning";
       String serviceClass = "course";
       ServiceIdentifier serviceId
       = new ServiceIdentifier(serverId, namespace, serviceClass);

       Object result = client.execute(serviceId, "getCourseMembers", params);

       String compositeMarkup = (String) result;
       Composite members = new Composite(compositeMarkup);
       System.out.println("Course members logged on are"+members.toString());
```

After making the connection, the client specifies the procedure identifier and the parameter values for the procedure. With that information the procedure may be called. The call returns a result in form of an Object or it throws a fault (i.e., a Java Exception).

### E-learning CBM

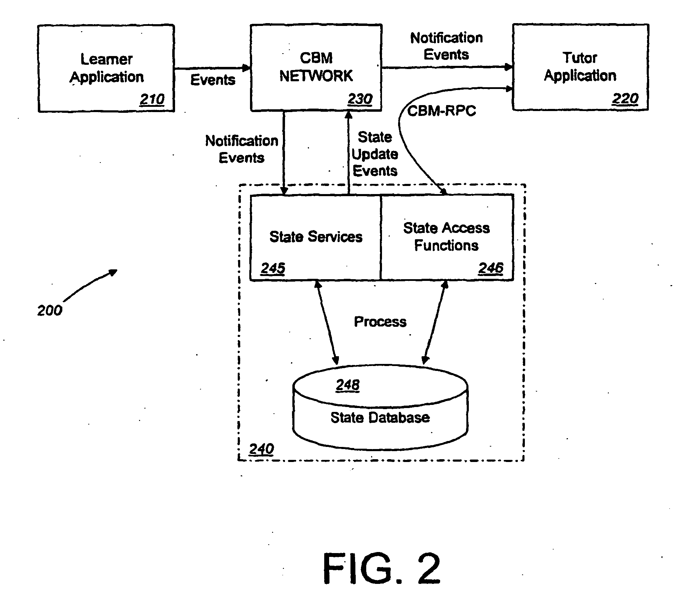

As shown in Fig. 2, a CBM e-learning system 200 may be used to implement CBM for e-learning applications. The CBM system 200 may include one or more applications that produce or publish information, for example, a learner application 210, and one or more applications that subscribe to the published information, for example, a tutor application 220. The learning applications may be applications used by learners in an e-learning system. For example, the learner applications 210 may provide course material to the learner to take a course (e.g., including information of various multi-media types, such as text, audio, video, and graphics, exercises, tests, and collaborative communications, such as, a chat session, e-mail, or instant messaging) or the application may provide administrative support for the learning system (e.g., booking courses, managing a curriculum, and searching for information). The applications 210, 220 may provided by one or more servers of the CBM learning system 200 and/or by a learning station/client (e.g., that allows the learner to connect to the network and run applications).

The CBM network 230 may include one or more data processing and distributions devices (e.g., servers, associated communications media, and data transport systems). For example, the CBM network 230 may include one or more filtering servers that receive published information and generate notifications that are transmitted to applications who subscribe to the information. The filtering server may compute the registered subscriptions that match a published event and generate a notification (i.e., a description of the real world occurrence) that is sent to the applications determined by from the computed subscriptions.

During a training session, a learner interacts with an e-learning system using the learner applications 210. Throughout each learning session, a learner continually performs various actions as the learner interacts with the applications. For example, a learner may login, log out, join a course, leave a course, start a course, finish a course, navigate within a course, complete an exercise, read or post messages to newsgroups, join a chat session, leave a chat session, and send a chat message. Each of these exemplary actions may be regarded as an "event." Each event may be published to the CBM network 230 to notify other applications that subscribe to the learner events. The subscribing applications may be any programs running on one or more servers or clients that request notifications for events in the e-learning system (e.g., a tutor application to monitor and manage one or more learners assigned to a tutor).

As a learner performs various actions within a course causing events to take place, the state of the learner changes (e.g., the learner's position within a course). However, a CBM network is stateless system. In other words, once an event is published, the CBM network 230 does not save notifications of past published events. As a result, applications logging one the CBM network 230 after events have been published are not automatically notified of these events. Therefore, to ensure persistence of published learner events, a state system 240 may be provided. The state system 240 may include one or more servers. The servers may provide one or more state services 245 that subscribe to one or more learner events.

When a learner event is published to the CBM network 230, the CBM network computes any subscriptions matching the event. The CBM network generates a notification of the event, which is sent by the CBM network to the subscribing state service (in addition to any applications subscribing to the event). The state service may process and store information based on the notification in one or more a state databases 248 and/or other storage devices. The state service 245 also may publish state update events to the CBM network when there is a modification to the state of a learner. The CBM network may compute registered subscriptions matching the update events and generate corresponding notifications, which are sent to application registered from the update event.

The state system 240 also may include one or more servers that provide state access functions 246. The state access functions may be called using the CBM-RPC protocol described above, for example, to access information (e.g., historical data) stored in the state database. The accessed information may be used to implement a start state within an application.

Because a CBM system is stateless, any application starting after learner events have been published to the network is not aware of the past learner events. In order to establish the current learner state and any other historical data (e.g., past learner events stored in the state database), an application may call a state access function using the CBM-RPC protocol. The state access function called by the CBM-RPC accesses the requested information from the database 248 and publishes a response to the CBM network, which notifies the requesting application. The response may be used as the initial information needed by the requesting application.

An application or state service may publish event information to the CBM network 230, and the CBM network 230 may provide notifications to any subscribing applications using the event formats described in detail below. The published information provided in the notifications may be used, for example, to provide an online tutor with data regarding the actions of learners assigned to the tutor. Notification formats may be defined for each e-learning application for any events that a subscribing application wants to monitor, according to the examples described below.

Events may be grouped into one or more levels (e.g., low-level and high-level events). Low-level events may include events that are not associated with a specific service and that do not require additional processing (e.g., a Login event). High-level events may be associated with specific services (e.g., a state service) and need additional processing. An example of a high-level service is the courseMembersChanged service. High-level events may be created by services from low-level events (e.g., the courseMembersChanged event may be derived from a courseJoinedEvent and a courseLeftEvent).

Each event may be assigned a unique event identifier. An event identifier may include one or more parts, such as, for example, an eventnamespace, an eventfamily, and an eventtype. An eventnamespace may be used to distinguish between events from different applications that have the same name and to group events from one application (e.g., so that other software can easily recognize events associated with the application). Event-namespaces may use a uniform resource locator (URL) as the namespace identifier. Each learning environment may have its own event namespace and its own semantics (i.e., the specification of the conditions that meet the requirements for publishing an event) associated with events

Events also may be grouped into logical event families (e.g., presence events, course events, navigation events, newsgroup events, and chat events). The event family may be used for handling events. A specific service may only register for an event family (e. g., if the family is "presence", the events are "log in" and "log out''). The service may use these events to determine information (e.g., using the previous example, a service may calculate the time as user was online).

The event-type defines a class of the event and serves as a basic identifier. All events are constructed with a string reference to the "source" that generated the event.

As described above, the CBM network includes one or more different data types, such as, for example, "int32", "int64", "real64" and "string" that may be used for values in notifications associated with published events. A composite data type may be used to represent event information that may not be expressed as one of the four data types described above, such as, for example a record or an array. For example, an array may be used to describe learners taking a course, identified as a list returned by the "get*CourseMembers*" procedure call. The list may have the following composite data type:

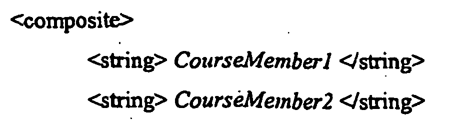

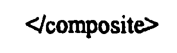

### CBM Format Specification

All events used by the CBM e-learning system may be formatted using the general event format listed below.

| **Name** | **Default** | **Type** | **Opt/Mand** | **Description** |
|---|---|---|---|---|
| CBM.event | 0 | int32 | M | major protocol version |
| Minor | 1 | int32 | M | minor protocol version |
| Source | URI | String | M | unique ID of client instance, that generated the event. |
| | | | | Suggested is the URI of the publishing application, e.g., the URI of a servlet-process. Applications may define their own unique identifier. This field can be used by consumers to resolve conflicting information from users that are running multiple clients. |
| Time | | int64 | M | Timestamp of the event. |
| eventnamespace | URI | String | M | namespace of event |
| Eventfamily | | String | M | eventfamily of event |
| Eventtype | | String | M | type of event this message applies to |
| documentation | | String | O | human readable information about this event |
| Params | | composite | M | identifiers of parameters in this message. This field is a composition of string elements and stored in an ordinary string |

Any number of different events may be provided for by the CBM system. Examples of events may include presence events, course events, navigation events, newsgroup events, and chat events. Exemplary formats for each of these families of events is describe in detail below.

Presence events may be used to indicate the presence of a learner (e.g., connection to the e-leaming system). For example, presence events may include a LoginEvent and a LogoutEvent. A "LoginEvent" may occur when a user (e.g., a learner or a tutor) connects to the learning system. A login event may be expressed using the following format: eventfamily = "presence" of type "string"; eventtype = "LoginEvent" of type string; parameters including [''user''] of type composite; and having a user = "userID" of type string (e.g., any string that uniquely identifies the user, such as an E-Mail-address). The following example illustrates a login event format:

| | |
|---|---|
| cbm.event: | 1 |
| minor: | 0 |
| source: | ''http://192.168.0.0/LoginServlet'' |
| time: | 157235472547 |
| eventnamespace: | "http://www.sap.com/cbm/elearning" |
| eventfamily: | "presence" |
| eventtype: | "LoginEvent" |
| documentation: | "User has logged in" |
| params: | "<composite><string>user</string></composite>" |
| user: | "twiki@learningsolution" |

A logout event may occur when a user leaves the learning environment (e.g., disconnects with the learning system). The logout event may have the following format: eventfamily = "presence" of type "string"; eventtype = "LogoutEvent" of type string; parameters including ["user"] of type composite; and having a user = "userID" of type string (e.g., any string that uniquely identifies the user, such as an E-Mail-address). An example of a logout event may be expressed as follows:

| | |
|---|---|
| cbm.event: | 1 |
| minor: | 0 |
| source: | "http://192.168.0.0/LoginServlet" |
| time: | 157235472547 |
| eventnamespace: | "http://www.sap.com/cbm/elearning" |
| eventfamily: | "presence" |
| eventtype: | "LogoutEvent" |
| documentation: | "User has logged out" |
| params: | "<composite><string>user</string></composite>" |
| user | "twiki@learningsolution" |

Course events may be used to indicate information about courses within the e-learning system and may include CourseJoinedEvent, CourseLeftEevent, and CourseMemberChangedEvent.

A "CourseJoinedEvent" occurs when a user enters a course. For learners this event may indicate that the learner is interacting with the course. For tutors this event may indicate that a tutor is present within a course to assist learners taking the course. The CourseJoinedEvent may have the following format: eventfamily = "course" of type "string"; eventtype = "CourseJoinedEvent" of type string; parameters may include ["user", "course"] of type composite; a user = "userID" of type string (e.g., any string that uniquely identifies the user, such as an E-Mail-address), and a course = "courseID" of type string (e.g., a unique course name). An example of a CourseJoinedEvent may be expressed as follows:

| | |
|---|---|
| cbm.event: | 1 |
| minor: | 0 |
| source: | "http://192.168.0.0/CourseLoginServlet" |
| time: | 157235472547 |
| eventnamespace: | "http://www.sap.com/cbm/elearning" |
| eventfamily: | "course" |
| eventtype: | "CourseJoinedEvent" |
| documentation: | "User has entered a course" |
| params: | "<composite><string>user</string> |
| | <string>course</string></composite>" |
| user: | "twiki@learningsolution" |
| course: | "sap20courses/beginnerscourse" |

A CourseLeftEvent occurs when a user leaves a course. For learners this event may indicate that the learner has stopped interacting with the course. For tutors this event may indicate that a tutor is unavailable to assist learners of the course. The CourseLeftEvent may have the following format: eventfamily = "course" of type "string"; eventtype = "CourseLeftEvent" of type string; parameters including ["user", "course"] of type composite; a user = ''userID'' of type string (e.g., any string that uniquely identifies the user, such as an E-Mail-address), and a course = "courseID" of type string (e.g., a unique course name). An example of a CourseLeftEvent may be expressed as follows:

### Example:

| | |
|---|---|
| cbm.event: | 1 |
| minor: | 0 |
| source: | "http://192.168.0.0/CourseLogoutServlet" |
| time: | 157235472547 |
| eventnamespace: | "http://www.sap.com/cbm/elearning" |
| eventfamily: | "course" |
| eventtype: | "CourseLeftEvent" |
| documentation: | "User has left a course" |
| params: | "<composite><string>user</string> |
| | <string>course</string></composite>" |
| user: | "twiki@learningsolution" |
| course: | "sap20courses/beginnerscourse" |

The CourseMembersChangedEvent is a high-level event that may be published by a state service that subscribes to the CourseJoinedEvent and the CourseLeftEvents. The state service may update an associated course member table from these events and publish the update as a CourseMembersChangedEvent notification. Course members may be those members that are currently online actively participating in the course. The CourseMembersChangedEvent may have the following format: eventfamily = "course" of type "string"; eventtype = "CourseMembersChangedEvent" of type string; parameters including ["course", "members"] of type composite; a course = "courseID" of type string (e.g., a unique course name); and members = ["user1", "user2", ...] of type composite. An example of a CourseMembersChangedEvent may be expressed as follows:

| | |
|---|---|
| cbm.event: | 1 |
| minor: | 0 |
| source: | "http://192.168.0.0/CourseService" |
| time: | 157235472547 |
| eventnamespace: | "http://www.sap.com/cbm/elearning" |
| eventfamily: | "course" |
| eventtype: | "CourseMembersChangedEvent" |
| documentation: | "List of all users in the course" |
| params: | "<composite><string>course</string> |
| | <string>members</string></composite>" |
| course: | "sap20courses/beginnerscourse" |
| members: | "<composite><string>twiki@learningsolution</string> |
| | <string>markus@tutorsolution</string></composite>" |

Navigation Events may be used to indicate the actions of a user within a course. Navigation events may include CoursePositionChangedEvent, ExerciseStartedEvent, and ExerciseFinishedEvent.

E-learning courses may be divided into different sections that a learner progresses through as the learner takes the course. The CoursePositionChangedEvent may be used to indicate when a learner moves from one section to another. This format does not dictate the way in which a course is divided and structured. Instead, the position inside a course may be defined by a unique positioning string. The CoursePositionChangedEvent may have the following format: eventfamily = "navigation" of type "string"; eventtype = "CoursePositionChangedEvent" of type string; parameters including ["learner", "course", "position"] of type composite; a learner = userID of type string (e.g., a unique identifier, such as an email address; a course = "'courseID" of type string (e.g., a unique course name); and a position = "positionID" of type string. An example of a CoursePositionChangedEvent may be expressed as follows:

| | |
|---|---|
| CBM.event: | 1 |
| minor: | 0 |
| source: | "http://192.168.0.0/Mediator" |
| time: | 157235472547 |
| eventnamespace: | "http://www.sap.com/cbm/elearning" |
| eventfamily: | "navigation" |
| eventtype: | "CoursePositionChangedEvent" |
| documentation: | "Subject, learner is dealing with" |
| params: | "<composite><string>learner</string> |
| | <string>course</string><string>position |
| | </string></composite>" |
| learner: | "twiki@learningsolution" |
| course: | "sap20courses/beginnerscourse" |
| position: | "sap20courses/beginnerscourse/chapter23'' |

E-learning courses may include various exercises (e.g., a working example, a practice problem, a quiz, or a test) that a learner performs while taking the course. The ExerciseStartedEvent may be used to indicate when a learner starts an exercise of a course. The ExerciseStartedEvent may have the following format: eventfamily = "navigation" of type "string"; eventtype = "ExerciseStartedEvent" of type string; parameters including ["learner", "course", "exercise"] of type composite; a learner = userID of type string (e.g., a unique identifier, such as an email address; a course = "courseID" of type string (e.g., a unique course name); and a exercise = "exerciseID" of type string (e.g., a unique exercise name). An example of an ExerciseStartedEvent may be expressed as follows:

| | |
|---|---|
| CBM.event: | 1 |
| minor: | 0 |
| source: | "http://192.168.0.0/Mediator" |
| time: | 157235472547 |
| eventnamespace: | "http://www.sap.com/cbm/elearning" |
| eventfamily: | "navigation" |
| eventtype: | "ExerciseStartedEvent" |
| documentation: | "User has started an exercise" |
| params: | "<composite><string>learner</string> |
| | <string>course</string><string>exercise |
| | </string></composite>" |
| learner: | "twiki@learningsolution" |
| course: | "sap20courses/beginnerscourse" |
| exercise: | "sap20courses/beginnerscourse/chapter23/exercise2" |

An ExerciseFinishedEvent may be used to indicate when a learner has completed or finished an exercise of a course. The ExerciseFinishedEvent may have the following format: eventfamily = "navigation" of type "string"; eventtype = "ExerciseFinishedEvent" of type string; parameters including ["learner", "course", "exercise"] of type composite; a learner = userID of type string (e.g., a unique identifier, such as an email address; a course = "courseID" of type string (e.g., a unique course name); and a exercise = "exerciseID" of type string (e.g., a unique exercise name). An example of an ExerciseStartedEvent may be expressed as follows:

| | |
|---|---|
| CBM.event: | 1 |
| minor: | 0 |
| source: | "http://192.168.0.0/Mediator" |
| time: | 157235472547 |
| eventnamespace: | "http://www.sap.com/cbm/elearning" |
| eventfamily: | "navigation" |
| eventtype: | "ExerciseFinishedEvent" |
| documentation: | "User has finished an exercise" |
| params: | "<composite><string>learner</string> |
| | <string>course</string><string>exercise |
| | </string></composite>" |
| learner: | "twiki@learningsolution" |
| course: | "sap20courses/beginnerscourse" |
| exercise: | "sap20courses/beginnerscourse/chapter23/exercise2 |

Newsgroup events may indicate when a user interacts with a newsgroup (e.g., articles from a publication). Newsgroup events may include a NewsgroupOpenedEvent, a NewsgroupArticleOpenedEvent, and a NewsgroupArticlePostedEvent.

Newsgroups may be used to exchange information within an e-learning environment. For example, newsgroups may be implemented using a blackboard/message board where learners and tutors may read and post articles (e.g., notes, questions, answers, and comments) regarding a course. Tutors may be interested whether a learner has opened a newsgroup and has read article headlines associated with a newsgroup. The NewsgroupOpenedEvent may be used to indicate when a user opens a newsgroup and reads the article names. The NewsgroupOpenedEvent may have the following format: eventfamily = "newsgroup" of type "string"; eventtype = "NewsgroupOpenedEvent" of type string; parameters including ["user", "newsgroup"] of type composite; a user = userID of type string (e.g., a unique identifier, such as an email address; and a newsgroup = "newsgroupID" of type string (e.g., a unique newsgroup name). An example of an NewsgroupOpenedEvent may be expressed as follows:

| | |
|---|---|
| CBM.event: | 1 |
| minor: | 0 |
| source: | "http://192.168.0.0/Mediator" |
| time: | 157235472547 |
| eventnamespace: | "http://www.sap.com/cbm/eleaming" |
| eventfamily: | "newsgroup" |
| eventtype: | "NewsgroupOpenedEvent" |
| documentation: | "User has opened a newsgroup" |
| params: | "<composite><string>user</string> |
| | <string>newsgroup</string></composite>" |
| user: | "twiki@leamingsolution" |
| newsgroup: | "sap20courses/beginnerscourse/newsgroup" |

The NewsgroupArticleOpenedEvent may be used to indicate when a user opens an article in a newsgroup in order to read the article. The NewsgroupOpenedEvent may have the following format: eventfamily = "newsgroup" of type "string"; eventtype = "NewsgroupArticleOpenedEvent" of type string; parameters including ["user", "newsgroup", and "articlename"] of type composite; a user = userID of type string (e.g., a unique identifier, such as an email address; a newsgroup = "newsgroupID" of type string (e.g., a unique newsgroup name); and an articlename = "articleID" of type string (e.g., a unique article name, such as an article headline). An example of an NewsgroupArticleOpenedEvent may be expressed as follows:

| | |
|---|---|
| CBM.event: | 1 |
| minor: | 0 |
| source: | ''http://192.168.0.0/NewsgroupManagerServlet'' |
| time: | 157235472547 |
| eventnamespace: | "http://www.sap.com/cbm/elearning" |
| eventfamily: | "newsgroup" |
| eventtype: | "NewsgroupArticleOpenedEvent" |
| documentation: | "User has opened a newsgroup article" |
| params: | "<composite><string>user</string> |
| | <string>newsgroup</string><string>articlename |
| | </string></composite>" |
| user: | "twiki@learningsolution" |
| newsgroup: | "sap20courses/beginnerscourse/newsgroup" |
| articlename: | "welcome to this newsgroup" |

The NewsgroupArticlePostedEvent may be used to indicate when a user sends an article to a newsgroup. The NewsgroupArticlePostedEvent may have the following format: eventfamily = "newsgroup" of type "string"; eventtype = "NewsgroupArticlePostedEvene" of type string; parameters including ["user", "newsgroup", "articlename", and "articletext"] of type composite; a user = userID of type string (e.g., a unique identifier, such as an email address; a newsgroup = "newsgroupID" of type string (e.g., a unique newsgroup name); an articlename = "articleID" of type string (e.g., a unique article name, such as an article headline), and article text = "text of article" of type string. An example of an NewsgroupArticlePostedEvent may be expressed as follows:

| | |
|---|---|
| CBM.event: | 1 |
| minor: | 0 |
| source: | "http://192.168.0.0/NewsgroupManagerServlet' |
| time: | 157235472547 |
| eventnamespace: | "http://www.sap.com/cbm/elearning" |
| eventfamily: | "newsgroup" |
| eventtype: | "NewsgroupArticlePostedEvent" |
| documentation: | "User has posted a newsgroup article" |
| params: | "<composite><string>user</string> |
| | <string>newsgroup</string><string>article |
| | </string><string>articletext</string></composite>" |
| user: | "twiki@learningsolution" |
| newsgroup: | "sap20courses/beginnerscourse/newsgroup" |
| articlename: | "welcome to this newsgroup" |
| articletext: | "I want to welcome you to ..." |

The e-learning system 200 may provide for interactive events between users (e.g., Chat Events). Chat events may include ChatJoinedEvent, ChatLeftEvent, ChatMessageEvent, and ChatMembersChangedEvent.

The ChatJoinedEvent may be used to indicate when a user joins a chat session. The ChatJoinedEvent may have the following format: eventfamily = "chat" of type "string"; eventtype = "ChatJoinedEvent" of type string; parameters including ["user", "chat"] of type composite; a user = userID of type string (e.g., a unique identifier, such as an email address; and a chat = "chatID" of type string (e.g., a unique chat identifier).. An example of an ChatJoinedEvent may be expressed as follows:

| | |
|---|---|
| CBM.event: | 1 |
| minor: | 0 |
| source: | "http://192.168.0.0/Mediator" |
| time: | 157235472547 |
| eventnamespace: | "http://www.sap.com/cbm/elearning" |
| eventfamily: | "chat" |
| eventtype: | "ChatJoinedEvent" |
| documentation: | "User has joined a chat" |
| params: | "<composite><string>user</string> |
| | <string>chat</string></composite>" |
| user: | "twiki@learningsolution" |
| chat: | "sap20courses/beginnerscourse/chatgroup" |

The ChatLeftEvent may be used to indicate when a user exits a chat session. The ChatLeftEvent may have the following format: eventfamily = "chat" of type "string"; eventtype = "ChatLeftEvent" of type string; parameters including ["user", "chat"] of type composite; a user = userID of type string (e.g., a unique identifier, such as an email address; and a chat = "chatID" of type string (e.g., a unique chat identifier). An example of a ChatLeftEvent may be expressed as follows:

| | |
|---|---|
| CBM.event: | 1 |
| minor: | 0 |
| source: | "http://192.168.0.0/Mediator" |
| time: | 157235472547 |
| eventnamespace: | "http://www.sap.com/cbm/elearning" |
| eventfamily: | "chat" |
| eventtype: | "ChatLeftEvent" |
| documentation: | "User has left a chat" |
| params: | "<composite><string>user</string> |

The ChatMessageEvent may be used to indicate when a user sends a message in a chat room. The ChatMessageEvent may have the following format: eventfamily = "chat" of type "string"; eventtype = "ChatMessageEvent" of type string; parameters including ["user", "chat", "Chatmessage"] of type composite; a user = userID of type string (e.g., a unique identifier, such as an email address; a chat = "chatID" of type string (e.g., a unique chat identifier), and chatmessage = message text of type string. An example of a ChatMessageEvent may be expressed as follows:

| | |
|---|---|
| CBM.event: | 1 |
| minor: | 0 |
| source: | "http://192.168.0.0/ChatApplet" |
| time: | 157235472547 |
| eventnamespace: | "http://www.sap.com/cbm/elearning" |
| eventfamily: | "chat" |
| eventtype: | "ChatMessageEvent" |
| documentation: | "User has sent a chat message" |
| params: | "<composite><string>user</string> |
| | <string>chat</string><string>chatmessage |
| | </string></composite>" |
| user: | "twiki@learningsolution" |
| chat: | "sap20courses/beginnerscourse/chatgroup" |
| chatmessage: | "Hi there ... :-)" |

The ChatMembersChangedEvent is a high-level event that is usually published by a state service that subscribes to a ChatJoinedEvent and a ChatLeftEvent. The ChatMembersChangedEvent state service updates a chat room member table from the ChatJoinedEvent or the ChatLeftEvent and publishes a ChatMembersChangedEvent notification. The ChatMembersChangedEvent may have the following format: eventfamily = "chat" of type "string"; eventtype = "ChatMembersChangedEvent" of type string; parameters including ["chat", "members"] of type composite; a chat = "chatID" of type string (e.g., a unique chat identifier), and members = ["user1", "user2", ...] of type composite. An example of a ChatMembersChangedEvent may be expressed as follows:

| | |
|---|---|
| CBM.event: | 1 |
| minor: | 0 |
| source: | "http://192.168.0.0/CourseService" |
| time: | 157235472547 |
| eventnamespace: | "http://www.sap.com/cbm/elearning" |
| eventfamily: | "chat" |
| eventtype: | "ChatMembersChangedEvent" |
| documentation: | "List of all users in the chatgroup" |
| params: | "<composite><string>chat</string> |
| | <string>members</string></composite>" |
| chat: | "sap20courses/chat" |
| members: | "<composite><string>twiki@learningsolution</string> |
| | <string>markus@tutorsolution</string></composite>" |

### Tutor Services

An important aspect of providing a suitable e-learning environment includes providing adequate support for the learners using the system. One aspect of proving adequate support is to oversee the progress of a learner and provide guidance and assistance based on the actions of a learner. However, online tutors are not able to have the personal or face-to-face contact with the learners to provide the oversight typically available from classroom based training.

Support for online learning is important to ensure that the needs of each learner are addressed. Although each learner may take the same training and/or courses, each learner has individual preferences, strengths, weaknesses, abilities, skills, knowledge, and know-how. As a result, different learners have different needs and require different support for their online training.

To provide for individual learner needs and generally improve the support for learning in an e-learning environment, the progress and interaction of learners with the learning material and learning system may be monitored using a CBM system 200. In particular, the actions of online learners and an overview of their dynamic learning state may be monitored to provide support for the individual learner. Tutors may observe the actions of online learners and their dynamic learning state to provide support and guidance when needed using the CBM system 200.

Monitoring of individual learners and their interaction with the learning system may be provided by a number of services provided, for example, by the state services of the state system 240. Examples of state services that may be provided to monitor learner events include a WatchlistService, a CourseMemberService, a DiaryService, and a LearnerService.

The WatchlistService generates a watchlist for a tutor. The watch list provides a list of all courses that the tutor wishes to monitor. The Watchlist may be implemented using two CBM-RPCs, for example, "getWatchlist" and "setWatchlist." The procedure getWatchlist may include the parameter tutor of type string and generate a return Watchlist of type composite. The procedure setWatchlist may include parameters tutor of type string and watchlist of type composite and return an indication Ok of type int32. Course names returned by the watchlist CBM-RPC may be stored in a file "watchlist.txt." The file may be stored in a directory of the server where the watchlist service is running. The file may be used to initialize a tutor application with the course names to populate in a watchlist window.

The CourseMemberService may be used to determine the members of a course, such as, for example, the names of the learners that are registered to take the course. The CourseMembers may be determined using four CBM-RPCs, for example, "getLearnersRegistered, " "setLearnersRegistered," "getLearnersOnline," and "setLearnersOnline." The procedure getLearnersRegistered may include the parameter coursename of type string and generate a return of learner names of type composite. The procedure setLearnersRegistered may include parameters coursename of type string and learnerlist of type composite and return an indication Ok of type int32. The course names returned by the CBM-RPC to the CourseMemberService may be stored in a file "learnerlist.txt." The file may be stored in a directory of the server where the CourseMemberService is running. The file may be used to initialize a tutor application to populate a course window with the names of learners of a course assigned to a tutor.

The CourseMemberService also may be used to determine the learners as a subgroup of the registered learners that are currently online (e.g., learners actively participating in the course) using the procedures getLearnersOnline and setLearnersOnline. The procedure getLearnersOnline may include the parameter coursename of type string and generate a return learners of type composite. The procedure setLearnersOnline may include parameters coursename of type string and learnerlist of type composite and return an indication Ok of type int32. Course names returned by a CBM-RPC of the CourseMemberService may be stored in a file "coursejoined.txt." The file may be stored in a directory of the server where the CourseMemberService is running. The file may be used to initialize a tutor application with the learners' names to implement a course window.

The course member service also may publish update events to indicate when the state of the group of online learners changes. For example, the service may publish an update event to indicate that a learner's state has changed from online to offline. The tutor application may subscribe to the update event and use a notification to change the indication of the learner's current status in the course window.

The Diary service stores a summary of the actions for each learner of the e-learning system for a specified period of time (e.g., a day, a week, and/or a month). The summary may include the name and the time of each action with the course performed by a learner. The Diary may be implemented using two CBM-RPCs getSummary and clearDiary. The procedure getsummary may include the parameters learner of type string, course of type string, and timemillis of type int64. The procedure clearDiary may include parameter learner of type string and return an indication Ok of type int32. The diary returned by a CBM-RPC of the DiaryService may be stored in a file "learnerdiary.txt." The file may be stored in a directory of the server where the Diary service is running. The file may be used to initialize a tutor application with the past acts of a learner over time to implement a diary window.

The LearnerService may be used to store the actual current occupation for each learner (e.g., the position of a learner or the current interaction of a learner with a course). The LearnerOccupation may be implemented using two CBM-RPCs of getCurrentOccupation and setCurrentOccupation. The method getCurrentOccupation may include the parameter learner of type string and generate a return of occupation of type string. The method setCurrentOccupation may include parameters learner of type string and occupation of type string and return an indication Ok of type int32. Occupations returned by a CBM-RPC of the LearnerService may be stored in a file "occupations.txt." The file may be stored in a directory of the server where the Diary service is running. The file may be used to initialize a tutor application to populate a course window with the occupation of each learner in a course.

### Tutor Monitoring Process

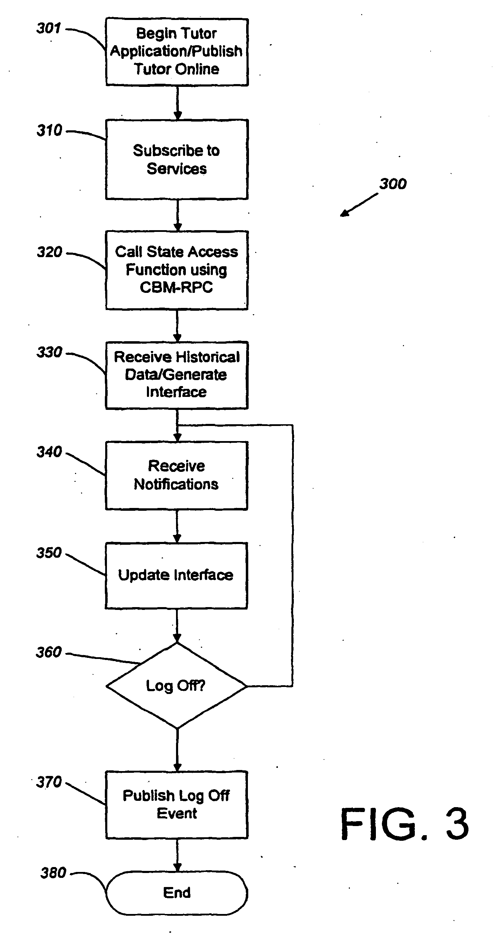

Fig. 3 shows a process 300 that may be used by a tutor to monitor an e-learning system. The tutor using a client device (e.g., a computer or work station) may initiate a tutor application by selecting the application and starting the application (301). The tutor application may publish a message to the CBM system 200 that the tutor is online and available to provide assistance. The tutor application subscribes to the CBM network and a number of services (e.g., a WatchlistService, a CourseMemberService, a DiaryService, and a LearnerService) provided by a state system 240 (310). The tutor application may make one or more CBM-RPCs of state access functions of the state system 240 using the CBM-RPC protocol (320). The tutor application receives data from the state system 240 returned as responses to the CBM-RPCs (330). The data may be used to populate a tutor interface with information used by a tutor to monitor and manage learners. Events and update events published to the CBM network from learner applications and states services, respectively, are continually provided to the tutor application as notifications (340). The notifications are used to update information displayed in the tutor interface (350). The tutor application may determines when the tutor logs-off (360). The application may publish a notification to the system that the tutor has logged off to inform learner applications that the tutor in no longer available to provide assistance (370) and end (380).

### Tutor Interface

The e-learning system may be provided with a tutor application that assists a tutor to monitor and manage one or more learners. The tutor application may provide a graphic user interface that allows the tutor to monitor and determine information about learners that use the e-learning system. The tutor interface may be implemented using a tutor application that functions in conjunction with a browser to display learner information in the interface. The tutor application may be provided with an application program interface (API) that uses published update events from the state services described above (e.g., a WatchlistService, a CourseMemberService, a DiaryService, and a LearnerService) and CBM-RPCs to gather information that is used to populate one or more windows and/or fields in the interface.

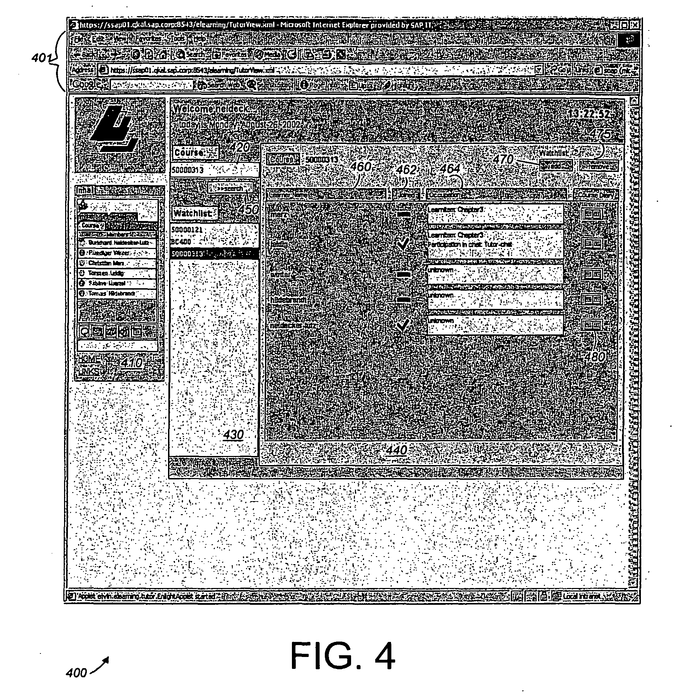

As shown in Fig. 4, a tutor interface 400 may be provided to offer tutors an overview of the courses and activities of learners that a tutor monitors. Using the interface 400, the tutor may gain insight into the activities of learners, provide better assistance to the learners in their online activities, and generally provide support to the learners. The tutor interface 400 may provide a number of menus bars and tool bars 401 to activate and control functions of the interface 400. The tutor interface 400 also may include one or more fields and windows that provide functions and information to the tutor. For example, the tutor interface 400 also may include a messaging window 410, a course search field 420, a watch list window 430, and a course window 440. The windows may be populated with information provided by the tutor application. The information may include data derived from published learner events, published update events, and CBM-RPCs.

The messaging window may provide the tutor with an instant messaging feature. The messaging window may provide a list of users that the tutor frequently contacts or monitors online (e.g., course instructors, other tutors, and learners). Selecting a name from the list may cause a message window to appear in which the tutor may send a message or join a chat. The messaging window provides one way in which a tutor may directly contact a learner who is online and provide assistance to the learner. Scroll bars may be provided to view of any information that may not be immediately displayed within the window (e.g., due to size or the amount of information included in the window).

A search field may be used to implement a course search function. A course may be selected (e.g., from a drop-down menu) or entered in the field (e.g., using a user input device). Activation of a search button 450 causes the tutor application to search for a specified course or provide a list of courses meeting a search criterion. The tutor may select a course that is returned by the search function and add the course to the watch list.

The watch list window may include a list of all courses (e.g., all course for which the tutor is responsible). A watch list may be maintained for each tutor. A course may be selected from the list using an input device (e.g., a mouse, a touchpad, a keypad, a pointer, or a keyboard). Selecting a course from the watch list populates the course window within information regarding the selected course.

A course window may provide the tutor with information about learner activities for a selected course. The window may include a name or identification of the course for which the window is populated. The window may display a list 460 of one or more indications (e.g., an ID or a name of a learner) associated with all learners enrolled in a course. Selection of the name from the list may activate a messaging feature (e.g., e-mail, chat, or instant message) allowing the tutor establish a dialog with the selected learner. The display also may include an indication 462 (e.g., a check or a minus) of whether the learner is currently engaged in any activities with the course. If the learner is engaged in a course activity, the display also may include a description of the activity 464 (e.g., an indication of the learner's position within a course, such as "Chapter 3").

The course window also may include one or more buttons or other input features that allow the tutor to interact with the course window. For example, a course add 470 and course remove 475 button may be provided allowing the tutor to add or remove the course from the watch list, respectively.

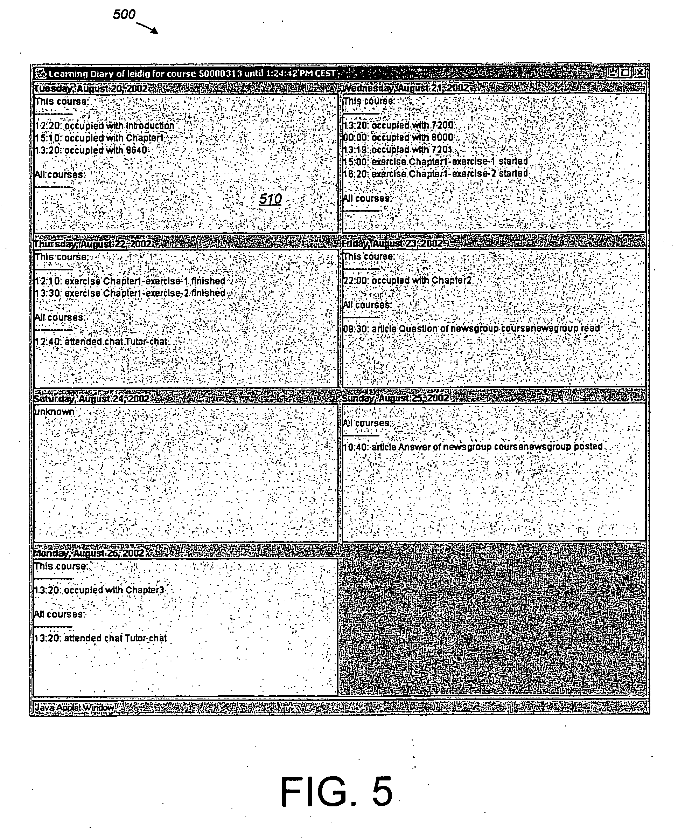

A course diary icon 480 may be provided for each learner. Selection of the icon 480 causes a diary window 500 to appear, as shown in Fig. 5. The diary window 500 may include a number of sections 510 that describe the historical activities of a learner within the course. For example, the activities of a learner may be divided into various periods of time (e.g., days, weeks, and/or months). The period of time may be selected from a menu or set a property of the tutor application. The activity of a learner at a particular date and time may be provided within one the sections 510 corresponding to the time period. In this way, the tutor may be provided with a general overview of the activities of learners within a course over the period of time.

The e-learning CBM-RPC protocol, tutor application, and tutor interface provides an architecture that supplies a tutor with valuable insight to the activities of the learners of an e-learning system not available from other computer based training systems. The insight allows the tutor to monitor the dynamic state of a leaner and may be used to provide individualize support for the learners, enhance their e-learning experience, and to augment the knowledge gained from using an e-learning system.

A number of implementations have been described. Nevertheless, it will be understood that various modifications may be made. For example, suitable results may be achieved if the steps of the disclosed techniques are performed in a different order and/or if components in a disclosed system, architecture, device, or circuit are combined in a different manner and/or replaced or supplemented by other components. Accordingly, other implementations are within the scope of the following claims.

## Claims

1. A tutor system in a content based messaging (CBM) network (230), comprising:
an input to receive one or more notifications of published learner events, each event representing a learner's action; and a processor to generate subscriptions to the notifications, to process the received notifications, and to generate a tutor interface based on the processed notification,
the interface including a course area to display dynamic learner state information,
wherein a content based messaging-remote procedure call (CBM-RPC) protocol is provided as an extension of the CBM network (230) that allows a client (120) to make a function or a procedure call across the CMB network (130), directly access a remote procedure, and receive data generated by the procedure,
wherein in the content based messaging-remote procedure call (CBM-RPC), a procedure name and parameters are specifyable to be published to the CBM network (130), the procedure name comprising a unique identification (ID), in particular a uniform resource identification (URI), and wherein one or more procedures are provided that are adapted to subscribe to the request and to generate responses to be published to the CBM network (130),
wherein a discovery protocol is provided adapted to be used to support the exploration of unique identifiers and their associated procedures, wherein according to the discovery protocol, the client (120) being adapted to publish a discovery request for a service to the CBM network (130), which is adapted to determine all registered services matching the request and to send a notification of the request to the service; wherein each service is adapted to send a response to the requesting consumer (120); the discovery request including a namespace identifier and/or a service class; wherein addressing in the CBM-RPC request is implemented using a "from" field being a unique identifier of the client making the procedure call and a "to" field being a unique identifier of a server to which the procedure is registered and being reported in the response to the discovery request, wherein in the response the "from" and "to" elements are interchanged;
the tutor system further comprising:
a state system (240) including at least one server and at least one state database (248), wherein the at least one server provides state access functions (246), wherein the state access functions (246) may be called using the CBM-RPC protocol to access information stored in the state database (248), wherein the information comprises past learner's events as historical data,
the at least one server further providing state services (245) that are adapted to
- subscribe to at least one leamer event.
- process and store information based on the notification, in the at least one database (248),
- publish state update events to the CBM network (230) when there is a modification to the state of a learner.

2. The system of one of the preceding claims wherein the course area displays an indication of whether a learner is interacting with a course.

3. The system of one of the preceding claims wherein the course area displays a current leamer action with a course.

4. The system of one of the preceding claims wherein the course area displays a position of a learner within a course.

5. The system of one of the preceding claims wherein the course area displays a learner diary feature.

6. The system of claim 5 wherein selection of the leamer diary feature causes the processor to generate a leamer diary display.

7. The system of claim 6 wherein the learner diary display displays one or more actions of a learner over a period of time.

8. The system of one of the preceding claims wherein the processor generates a watch list display including one or more courses monitored by the interface.

9. The system of claim 8 wherein selection of a course from the watch list causes the processor to populate the course area with information based on the selected course.

10. The system of one of the preceding claims wherein the processor generates a message area to provide a message service.

11. The system of claim 10 wherein the input is configured to receive a return notification based on the CBM-RPC and the processor is configured to populate the interface with information based on the return notification.

12. The system of claim 11 wherein the information based on the return notification is learner state information.

13. A method of providing a tutoring interface in a content based messaging (CBM) network, comprising: subscribing to one or more learner events, each event representing a learner's action; receiving one or more notifications based on the subscriptions to events; and generating a tutor interface based on received notifications, the interface including learner information, the method further comprising
- providing a content based messaging-remote procedure call (CBM-RPC) protocol as an extension of the CBM network (230) allowing a client (120) to make a function or a procedure call across the CBM network (130), to directly access a remote procedure, and to receive data generated by the procedure,
- specifying a procedure name and parameters in the content based messaging remote procedure call (CBM-RPC), which is published to the CBM network (130), the procedure name comprising a unique identification (ID), in particular a uniform resource identification (URI), and
- providing one or more procedures subscribed to the request and generate responses that are published to the CBM network (130),
- providing a discovery protocol which may be used to support the exploration of unique identifiers and their associated procedures; wherein according to the discovery protocol, the client (120) publishes a discovery request for a service to the CBM network (130), which determines all registered services matching the request and sends a notification of the request to the service; wherein each service sends a response to the requesting client (120); the discovery request including a namespace identifier and/or a service class; wherein addressing is implemented using a "from" field being a unique identifier of the client making the procedure call and a "to" field being a unique identifier of a server to which the procedure is registered and being reported in the response to the discovery request, wherein in the response the "from" and "to" elements are interchanged;
- providing state access functions (246), wherein the state access functions (246) may be called using the CBM-RPC protocol to access information stored in the state database (248), wherein the information comprises past learner's events as historical data, and
- providing state services (245) that are adapted to
- subscribe to at least one learner event,
- process and store information based on the notification, in the at least one state database (248),
- publish state update events to the CBM network (230) when there is a modification to the state of a learner.

14. The method of claim 13 wherein subscribing to one or more learner events includes subscribing to a content based message network.

15. The method of one of claims 13, 14 wherein generating a tutor interface includes generating a course area.

16. The method of one of claims 13 to 15 further comprising receiving learner update event notifications from a content based messaging system and populating the course area with information derived from the received update events.

17. The method of claim 16 wherein the receiving update events includes receiving an update event from a state service.

18. A computer readable medium including instructions for performing the method according to one of claims 13 to 17, when loaded into a computer system.

## Patentansprüche

1. Tutor System in einem inhaltsbasierten Nachrichten- (CBM) Netzwerk (230), umfassend:
eine Eingabe zum Empfangen von einer oder mehreren Mitteilung(en) von publizierten Schüler- bzw. Lernendenereignissen, wobei jedes Ereignis eine Schülertätigkeit darstellt bzw. repräsentiert; und einen Prozessor, um Subskriptionen zu den Notifikationen bzw. Mitteilungen zu generieren, um die empfangenen Mitteilungen zu bearbeiten, und um ein Tutor Interface bzw. eine Tutor Schnittstelle basierend auf der bearbeiteten Mitteilung zu generieren bzw. zu erzeugen,
wobei das Interface bzw. die Schnittstelle einen Kursbereich beinhaltet, um eine dynamische Schülerzustandsinformation anzuzeigen,
wobei ein inhaltsbasiertes Benachrichtigungs- bzw. Nachrichten-Fernverfahrens-Aufruf- (CBM-RPC) Protokoll als ein Zusatz des CBM-Netzwerks (230) zur Verfügung gestellt ist, welches es einem Client (120) ermöglicht, eine Funktion und einen Prozedur- bzw. Verfahrensaufruf über das CBM-Netzwerk (130) durchzuführen, direkt auf ein entferntes bzw. Fernverfahren zuzugreifen und Daten zu empfangen, die durch das Verfahren generiert sind,
wobei in dem inhaltsbasierten Nachrichten-Fernverfahrens-Aufruf (CBM-RPC) ein Prozedur- bzw. Verfahrensname und Parameter spezifizierbar sind, um zu dem CBM-Netzwerk (130) publiziert zu werden, wobei der Verfahrensname eine einzigartige Identifikation (ID), insbesondere eine einheitliche Ressourcenidentifikation (URI) umfaßt, und wobei ein oder mehrere Verfahren zur Verfügung gestellt ist bzw. sind, welche(s) adaptiert ist bzw. sind, um die Anfrage zu abonnieren bzw. zu subskribieren und Antworten zu generieren, die in dem CBM-Netzwerk (130) zu publizieren sind,
wobei ein Entdeckungsprotokoll zur Verfügung gestellt ist, das adaptiert ist, um verwendet zu werden, um die Erforschung von einzigartigen Identifikationen und ihrer zugehörigen Verfahren zu unterstützen, wobei gemäß dem Entdeckungsprotokoll der Client (120) adaptiert ist, um eine Entdeckungsanfrage für einen Dienst bzw. ein Service an das CBM-Netzwerk (130) zu publizieren, welches adaptiert ist, um alle registrierten Dienste zu bestimmen, die mit der Anfrage übereinstimmen, und eine Mitteilung betreffend die Anfrage an den Dienst zu senden; wobei jeder Dienst adaptiert ist, eine Antwort an den anfragenden Konsumenten (120) zu senden; wobei die Entdeckungsanfrage eine Namenraumidentifikation und/oder eine Dienst- bzw. Serviceklasse beinhaltet; wobei ein Adressieren in der CBM-RPC Anfrage unter Verwendung eines "from" bzw. "von" Felds, das eine einzigartige Identifikation des Client ist, der den Verfahrensaufruf tätigt, und eines "to" bzw. "zu" Felds implementiert ist, das eine einzigartige Identifikation eines Servers ist, an welchem das Verfahren registriert ist, und in der Antwort auf die Entdeckungsanfrage berichtet ist bzw. wird, wobei in der Antwort die "von" und "zu" Elemente untereinander ausgetauscht sind;
wobei das Tutor System weiterhin umfaßt:
ein Zustands- bzw. Statussystem (240), beinhaltend wenigstens einen Server und wenigstens eine Statusdatenbank (248), wobei der wenigstens eine Server Statuszugriffsfunktionen (246) zur Verfügung stellt, wobei die Statuszugriffsfunktionen (246) unter Verwendung des CBM-RPC Protokolls ab- bzw. aufgerufen werden können, um auf Information zuzugreifen, die in der Statusdatenbank (248) gespeichert ist, wobei die Information vergangene Schülerereignisse als historische Daten umfaßt,
wobei der wenigstens eine Server weiterhin Statutsdienste (245) zur Verfügung stellt, welche adaptiert sind, um
- wenigstens ein Schülerereignis zu subskribieren,
- Information basierend auf der Mitteilung in der wenigstens einen Datenbank (248) zu bearbeiten und zu speichern,
- Statusaktualisierungsereignisse zu dem CBM-Netzwerk (230) zu publizieren, wenn eine Modifikation an dem Zustand bzw. Status eines Schülers existiert.

2. System nach einem der vorhergehenden Ansprüche, wobei der Kursbereich einen Hinweis bzw. eine Anzeige anzeigt, ob ein Schüler mit einem Kurs interagiert bzw. wechselwirkt.

3. System nach einem der vorhergehenden Ansprüche, wobei der Kursbereich eine gegenwärtige Schüleraktion mit einem Kurs anzeigt.

4. System nach einem der vorhergehenden Ansprüche, wobei der Kursbereich eine Position eines Schülers in einem Kurs anzeigt.

5. System nach einem der vorhergehenden Ansprüche, wobei der Kursbereich ein Schülerlehrplanmerkmal anzeigt.

6. System nach Anspruch 5, wobei eine Auswahl des Schülerlehrplanmerkmals den Prozessor veranlaßt, eine Schülerlehrplananzeige zu generieren.

7. System nach Anspruch 6, wobei die Schülerlehrplananzeige eine oder mehrere Aktion(en) eines Schülers über einen Zeitraum anzeigt.

8. System nach einem der vorhergehenden Ansprüche, wobei der Prozessor eine Überprüfungs- bzw. Beobachtungslistenanzeige generiert, beinhaltend einen oder mehrere Kurs(e), der bzw. die durch das Interface überwacht ist bzw. sind.

9. System nach Anspruch 8, wobei eine Auswahl eines Kurses von der Beobachtungsliste den Prozessor veranlaßt, den Kursbereich mit Information basierend auf dem gewählten Kurs zu bevölkern.

10. System nach einem der vorhergehenden Ansprüche, wobei der Prozessor einen Nachrichtenbereich generiert, um einen Nachrichtendienst zur Verfügung zu stellen.

11. System nach Anspruch 10, wobei die Eingabe konfiguriert ist, um eine Rückkehrmitteilung basierend auf dem CBM-RPC zu empfangen, und der Prozessor konfiguriert ist, um das Interface mit Information basierend auf der Rückkehrmitteilung zu bevölkern.

12. System nach Anspruch 11, wobei die Information basierend auf der Rückkehrmitteilung Schülerzustandsinformation ist.

13. Verfahren zum Bereitstellen einer Tutor Schnittstelle in einem inhaltsbasierten Nachrichten- (CBM) Netzwerk, umfassend: Subskribieren von einem oder mehreren Schülerereignis(sen), wobei jedes Ereignis eine Schülertätigkeit darstellt bzw. repräsentiert; Empfangen von einer oder mehreren Mitteilung(en) basierend auf den Subskriptionen für Ereignisse; und Generieren bzw. Erzeugen eines Tutor Interface bzw. einer Tutor Schnittstelle, basierend auf empfangenen Mitteilungen, wobei die Schnittstelle Schülerinformation beinhaltet, wobei das Verfahren weiterhin umfaßt
- Bereitstellen eines inhaltsbasierten Nachrichten-Fernverfahrens-Aufruf- (CBM-RPC) Protokolls als eine Erweiterung des CBM-Netzwerks (230), welches es einem Client (120) ermöglicht, eine Funktion oder einen Verfahrensaufruf über das CBM-Netzwerk (130) durchzuführen, um direkt auf ein entferntes bzw. Fernverfahren zuzugreifen, und um Daten zu empfangen, die durch das Verfahren generiert werden,
- Spezifizieren eines Prozedur- bzw. Verfahrennamens und von Parametern in dem inhaltsbasierten Nachrichten-Fernverfahrens-Aufruf (CBM-RPC), welcher zu dem CBM-Netzwerk (130) publiziert wird, wobei der Verfahrensname eine einzigartige Identifikation (ID), insbesondere eine einheitliche Ressourcenidentifikation (URI) umfaßt, und
- Bereitstellen von einem oder mehreren Verfahren, das bzw. die für die Anfrage subskribiert wird bzw. werden, und Generieren von Antworten, welche zu dem CBM-Netzwerk (130) publiziert werden,
- Bereitstellen eines Entdeckungsprotokolls, welches verwendet werden kann, um die Erforschung von einzigartigen Identifikationen und ihrer zugehörigen Prozeduren bzw. Verfahren zu unterstützen; wobei gemäß dem Entdeckungsprotokoll der Client (120) eine Entdeckungsanfrage für einen Dienst an das CBM-Netzwerk (130) publiziert, welches alle registrierten Dienste bestimmt, die mit der Anfrage übereinstimmen, und eine Mitteilung der Anfrage zu dem Dienst sendet; wobei jeder Dienst eine Antwort an den anfragenden Client (120) sendet; wobei die Entdeckungsanfrage eine Namensraumidentifikation und/oder eine Dienst- bzw. Serviceklasse beinhaltet; wobei ein Adressieren unter Verwendung eines "from" bzw. "von" Felds, welches für eine Identifikation des Client einzigartig ist, der den Verfahrensaufruf tätigt, und eines "to" bzw. "zu" Felds implementiert wird, das eine einzigartige Identifikation eines Servers ist, an welchem das Verfahren registriert wird, und welcher in der Antwort auf die Entdeckungsanfrage berichtet wird, wobei in der Antwort die "von" und "zu" Elemente untereinander ausgetauscht werden;
- Bereitstellen von Status- bzw. Zustandszugriffsfunktionen (246), wobei die Zustandszugriffsfunktionen (246) unter Verwendung des CBM-RPC Protokolls aufgerufen werden können, um auf Information zuzugreifen, welche in der Statusdatenbank (248) gespeichert wird, wobei die Information vergangene Schülerereignisse als historische Daten umfaßt, und
- Bereitstellen von Status- bzw. Zustandsdiensten (245), welche adaptiert werden, um
- wenigstens ein Schülerereignis zu subskribieren bzw. zu abonnieren,
- Information basierend auf der Mitteilung in der wenigstens einen Zustandsdatenbank (248) zu bearbeiten und zu speichern,
- Zustandsaktualisierungsereignisse an das CBM-Netzwerk (230) zu publizieren, wenn eine Modifikation in dem Zustand eines Schülers existiert.

14. Verfahren nach Anspruch 13, wobei ein Subskribieren von einem oder mehreren Schülerereignis(sen) ein Subskribieren eines inhaltsbasierten Nachrichtennetzwerks beinhaltet.

15. Verfahren nach einem der Ansprüche 13, 14, wobei ein Generieren einer Tutor Schnittstelle ein Generieren eines Kursbereichs beinhaltet.

16. Verfahren nach einem der Ansprüche 13 bis 15, weiterhin umfassend ein Empfangen von Schüleraktualisierungs-Ereignismitteilungen von einem inhaltsbasierten Benachrichtigungs- bzw. Nachrichtensystem und Bevölkern des Kursbereichs mit Information, die von den empfangenen Aktualisierungsereignissen abgeleitet wird.

17. Verfahren nach Anspruch 16, wobei das Empfangen von Aktualisierungsereignissen ein Empfangen eines Aktualisierungsereignisses von einem Zustandsdienst beinhaltet.

18. Computer-lesbares Medium, beinhaltend Instruktionen zum Durchführen des Verfahrens gemäß einem der Ansprüche 13 bis 17, wenn es in ein Computersystem geladen ist.

## Revendications

1. Système de tuteur dans un réseau de messagerie basé sur un contenu (CBM) (230) comportant :
une entrée pour recevoir une ou plusieurs notifications d'événements publiés de l'apprenant, chaque événement représentant une action d'apprenant ; et un processeur pour générer des abonnements aux notifications, pour traiter les notifications reçues, et pour générer une interface de tuteur sur la base de la notification traitée,
l'interface incluant une zone de cours pour afficher des informations dynamiques d'état d'apprenant,
dans lequel un protocole d'appel de processus distant de messagerie basé sur un contenu (CBM-RPC) est fourni en tant qu'extension du réseau CBM (230), qui permet à un client (120) de créer une fonction ou un appel de processus à travers le réseau CBM (130), d'accéder directement à un processus distant, et de recevoir des données générées par le processus,
dans lequel dans l'appel de processus distant de messagerie basé sur un contenu (CMB-RPC), un nom de processus et des paramètres peuvent être spécifiés comme étant à publier dans le réseau CBM (130)', le nom de processus comportant une identification unique (ID), en particulier une identification de ressource uniforme (URI), et dans lequel un ou plusieurs processus sont fournis, lesquels sont adaptés pour s'abonner à la demande et pour générer des réponses à publier dans le réseau CBM (130),
dans lequel un protocole de découverte est fourni qui est adapté pour être utilisé pour supporter l'exploration d'identifiants uniques et de leurs processus associés, dans lequel conformément au protocole de découverte, le client (120) étant adapté pour publier une demande de découverte pour un service dans le réseau CBM (130), qui est adapté pour déterminer tous les services enregistrés correspondant à la demande et pour envoyer une notification de la demande au service ; dans lequel chaque service est adapté pour envoyer une réponse au client demandeur (120) ; la demande de découverte incluant un identifiant d'espace de nom et/ou une classe de service ; dans lequel l'adressage dans la demande CBM-RPC est implémenté en utilisant un champ "depuis" étant un identifiant unique du client créant l'appel de processus et un champ "à" étant un identifiant unique d'un serveur dans lequel le processus est enregistré et étant reporté dans la réponse à la requête de découverte, dans lequel dans la réponse, les éléments "depuis" et "à" sont interchangés ;
le système de tuteur comportant en outre :
un système d'état (240) incluant au moins un serveur et au moins une base de données d'état (248), dans lequel le au moins un serveur fournit des fonctions d'accès d'état (246), dans lequel les fonctions d'accès d'état (246) peuvent être appelées en utilisant le protocole CBM-RPC pour accéder à des informations mémorisées dans la base de données d'état (248), les informations comportant des événements d'apprenant passés en tant que données d'historique,
le au moins un serveur délivrant en outre des services d'état (245) qui sont adaptés pour
- s'abonner à au moins un événement d'apprenant,
- traiter et mémoriser des informations sur la base de la notification, dans la au moins une base de données (248),
- publier des événements de mise à jour d'état dans le réseau CBM (230) lorsqu'il existe une modification dans l'état d'un apprenant.

2. Système selon l'une quelconque des revendications précédentes, dans lequel la zone de cours affiche une indication indiquant si un apprenant interagit avec un cours.

3. Système selon l'une quelconque des revendications précédentes, dans lequel la zone de cours affiche une action d'apprenant courante avec un cours.

4. Système selon l'une quelconque des revendications précédentes, dans lequel la zone de cours affiche une position d'un apprenant dans un cours.

5. Système selon l'une quelconque des revendications précédentes, dans lequel la zone de cours affiche une caractéristique quotidienne d'apprenant.

6. Système selon la revendication 5, dans lequel la sélection de la caractéristique quotidienne d'apprenant amène le processeur à générer un affichage quotidien d'apprenant.

7. Système selon la revendication 6, dans lequel l'affichage quotidien d'apprenant affiche une ou plusieurs actions d'un apprenant sur une période de temps.

8. Système selon l'une quelconque des revendications précédentes, dans lequel le processeur génère un affichage de liste d'observations incluant un ou plusieurs cours surveillés par l'interface.

9. Système selon la revendication 8, dans lequel la sélection d'un cours depuis la liste d'observations amène le processeur à remplir la zone de cours avec des informations basées sur le cours sélectionné.

10. Système selon l'une quelconque des revendications précédentes, dans lequel le processeur génère une zone de message pour délivrer un service de message.

11. Système selon la revendication 10, dans lequel l'entrée est configurée pour recevoir une notification de retour sur la base du protocole CBM-RPC et le processeur est configuré pour remplir l'interface d'informations basées sur la notification de retour.

12. Système selon la revendication 11, dans lequel les informations basées sur la notification de retour sont des informations d'état d'apprenant.

13. Procédé de fourniture d'une interface de tuteur dans un réseau de messagerie basé sur un contenu (CBM), comportant les étapes suivantes : s'abonner à un ou plusieurs événements d'apprenant, chaque événement représentant une action d'apprenant ; recevoir une ou plusieurs notifications sur la base des abonnements aux événements ; et générer une interface de tuteur sur la base des notifications reçues, l'interface incluant des informations d'apprenant, le procédé comportant en outre les étapes suivantes
- délivrer un protocole d'appel de processus distant de messagerie basé sur un contenu (CBM-RPC) en tant qu'extension du réseau CBM (230) permettant à un client (120) de créer une fonction ou un appel de processus via le réseau CBM (130), pour accéder directement à un processus distant, et pour recevoir des données générées par le processus,
- spécifier un nom de processus et des paramètres dans l'appel de processus distant-de messagerie basé sur un contenu (CBM-RPC), qui est publié dans le réseau CBM (130), le nom de processus comportant une identification unique (ID), en particulier une identification de ressource uniforme (URI), et
- délivrer un ou plusieurs processus souscrits à la demande et générer des réponses qui sont publiées dans le réseau CBM (130),
- délivrer un protocole de découverte qui peut être utilisé pour supporter l'exploration d'identifiants uniques et de leurs processus associés ; conformément au protocole de découverte, le client (120) publiant une demande de découverte pour un service dans le réseau CBM (130), lequel détermine tous les services enregistrés correspondant à la demande et envoie une notification de la demande au service ; dans lequel chaque service envoie une réponse au client demandeur (120) ; la demande de découverte incluant un identifiant d'espace de nom et/ou une classe de service ; dans lequel l'adressage est mis en oeuvre en utilisant un champ "depuis" étant un identifiant unique du client créant l'appel de processus et un champ "à" étant un identifiant unique d'un serveur dans lequel le processus est enregistré et étant reporté dans la réponse à la requête de découverte, dans lequel dans la réponse, les éléments "depuis" et "à" sont interchangés ;
- délivrer des fonctions d'accès d'état (246), les fonctions d'accès d'état (246) pouvant être appelées en utilisant le protocole CBM-RPC pour accéder à des informations mémorisées dans la base de données d'état (248), les informations comportant des événements d'apprenant passés en tant que données d'historique, et
- délivrer des services d'état (245) qui sont adaptés pour
- s'abonner à au moins un événement d'apprenant,
- traiter et mémoriser des informations sur la base de la notification, dans la au moins une base de données d'état (248),
- publier des événements de mise à jour d'état dans le réseau CBM (230) lorsqu'il existe une modification dans l'état d'un apprenant.

14. Procédé selon la revendication 13, dans lequel l'étape d'abonnement à un ou plusieurs événements d'apprenant inclut une étape d'abonnement à un réseau de message basé sur un contenu.

15. Procédé selon l'une quelconque des revendications 13, 14, dans lequel l'étape de génération d'une interface de tuteur inclut une étape de génération d'une zone de cours.

16. Procédé selon l'une quelconque des revendications 13 à 15, comportant en outre les étapes suivantes:
recevoir les notifications d'événements de mise à jour d'apprenant en provenance d'un système de messagerie basé sur un contenu et remplir la zone de cours avec des informations dérivées des événements de mise à jour reçus.

17. Procédé selon la revendication 16, dans lequel les événements de mise à jour de réception incluent la réception d'un événement de mise à jour en provenance d'un service d'état.

18. Support lisible par ordinateur incluant des instructions pour mettre en oeuvre le procédé conformément à l'une des revendications 13 à 17, lorsque chargé dans un système informatique.
